# EUROPEAN PATENT APPLICATION

(11) **EP 0 639 031 A2**
(43) Date of publication of application: **15.02.1995**
(21) Application number: 94110071.1
(22) Date of filing: 29.06.1994
(51) Int. Cl.: H04N 7/24, H04N 7/26, H04N 7/50, H04N 13/00

(54) **Method and apparatus for encoding stereo video signals**

(30) Priority: 09.07.1993 US 89979
(71) Applicant: RCA Thomson Licensing Corporation, Princeton New Jersey 08540 (US)
(72) Inventor: Uz, Kamil Metin, Hamilton NJ 08619 (US)
(74) Representative: Wördemann, Hermes, Dipl.-Ing.

(57) **Abstract**

In a system for compressing stereoscopic video signals, left and right stereoscopic video image signals are provided by a pair of, for example, synchronized cameras (10,11). The left video image signal is applied to compression apparatus (12-19) which compresses the left video signal according to a flatfield signal compression protocol such as the MPEG (Moving Pictures Experts Group of the International Standards Organization) moving pictures compression protocol. The right video image signal is also applied to compression apparatus (23-28) which compresses the right video images according to a predictive process wherein the predictions are made, at least in part, with respect to images of the left video image signal. The compressed left and right image signals are conditioned (20,29) for transmission. The compressed left image signals may be received by standard receivers for reproduction of the left (flatfield) images, and the compressed left and right signals may be received by enhanced receivers for reproduction of stereoscopic images.

## Description

This invention relates to generating, transmitting and receiving compressed video signals for reproducing stereoscopic images.

Advances in integrated circuit technology and video signal compression processes are tending to make the transmission and reception of stereoscopic video signals economically practical. Nominally, to reproduce real stereoscopic images, pairs of right and left images are required. The right and left images are produced by separate cameras which are separated by a small horizontal distance, such as the average distance separating people's eyes. Since the right and left images are relatively mutually exclusive, the bandwidth required to transmit stereo images would appear to be double the bandwidth required to transmit normal flatfield images. The double bandwidth channel or two channels of normal bandwidth required to transmit a stereo signal is economically, and to some extent technically unacceptable.

The present invention is a method and apparatus for producing and conveying stereoscopic video signals without significant increase in transmission bandwidth, and with only nominal extra coding and decoding apparatus relative to single channel flatfield video systems. As used herein, "flatfield video" is meant to connote standard non-stereoscopic video signal.

Left and right stereoscopic video image signals are provided by a pair of, for example, synchronized cameras. The left video image signal is applied to compression apparatus which compresses the left video signal according to a flatfield signal compression protocol such as the MPEG (Moving Pictures Experts Group of the International Standards Organization) moving pictures compression protocol. The right video image signal is also applied to compression apparatus which compresses the right video images according to a predictive process wherein the predictions are made, at least in part, with respect to images of the left video image signal. The compressed left and right image signals are conditioned for transmission. The compressed left image signals may be received by standard receivers for reproduction of the left (flatfield) images, and the compressed left and right signals may be received by enhanced receivers for reproduction of stereoscopic images.

### BRIEF DESCRIPTION OF THE DRAWINGS

FIGURE 1 is a pictorial diagram of a predictive video signal compression process, useful in describing the invention.

FIGURES 2, 3 and 4 are pictorial diagrams of alternative video signal compression processes embodying the invention.

FIGURE 5 and 7 are schematic diagrams of stereoscopic video signal compression apparatus embodying the invention.

FIGURE 6 is a schematic diagram of stereoscopic video signal decompression apparatus embodying the invention.

Stereoscopic video images may be compressed with minimal extra codewords over that required to code one of the stereoscopic pairs of video signals if motion compensated predictive compression is utilized. It will be recognized that stereoscopic image signals consist of right and left image signals taken by separate cameras located in close fixed proximity to each other. All image objects relatively distant from the respective cameras will appear to be essentially identical in size, color and location etc. in both cameras (assuming matched cameras are utilized). Closer objects will appear to have different horizontal locations in the two cameras and due to the relative distances of various closer image objects, differential occlusions may be realized in the two cameras. In general, however, images simultaneously scanned by both cameras will contain substantially similar information.

Motion compensated predictive encoding, of the type described in the MPEG protocol, divides respective images into small areas, and a search is made of neighboring images to locate identical or nearly identical areas in a neighboring image. The location of the area in the neighboring image and the differences between the area of the current image and the corresponding identical or nearly identical area, of the neighboring image, are coded for transmission. Note that if the corresponding areas are in fact identical, all differences will be zero and an area may be coded with simply a vector identifying the location of the corresponding area and a code indicating that all differences are zero. Thus compressed identical or nearly identical images may be realized with relatively few codewords. Since stereoscopic image pairs fall into the category of identical or nearly identical images, one of the right or left image signals can be compressed with relatively few codewords.

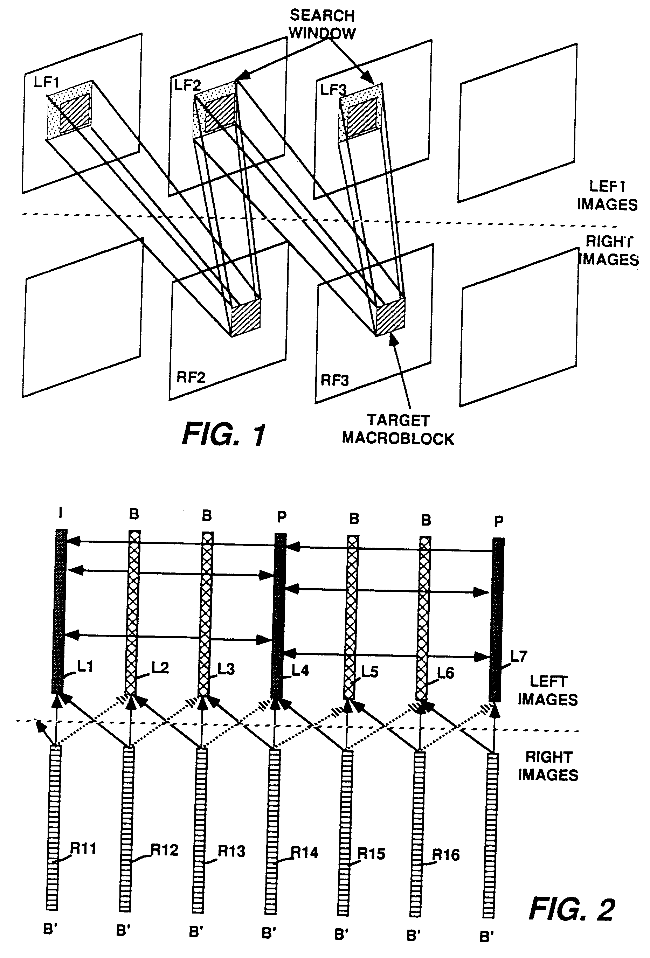

Referring to FIGURE 1, two sequences of images (video frames) are illustrated, corresponding to left and right image signal components of a stereoscopic video signal. It is assumed that image pairs are captured simultaneously precluding intervening image object motion between vertically adjacent image frames. The left or upper sequence of frames is compressed independent of the right or lower sequence of frames. Conversely, the lower or right sequence of frames is predictively compressed in dependent relation with the left sequence. As illustrated, respective right frames are predictively encoded with respect to left frames immediately above and one frame to the leftward.

That is, a compressed version of right field RF2 may be predicted from left frame LF1 or left frame LF2 or both as in the MPEG protocol for example. Similarly a compressed version of right frame RF3 may be predicted from left frame LF2 of left frame LF3 or both.

Referring to FIGURE 2, there are shown a plurality of vertical rectangles each of which represents a video frame. The top row of frames represent a sequence of left images of stereoscopic video signal and the bottom sequence represent the right images of the stereoscopic video signal. The left signal has I, P, B designations vertically disposed above respective frames, which designations indicate the compression process to be utilized in compressing that frame according to an MPEG protocol. Frames designated I are intraframe encoded. In an MPEG system intraframe encoding involves spatially dividing the frame into small areas, then discrete Cosine Transforming, quantizing, run-length and statistically coding the signal representing such areas. Frames designated P are predictively encoded from either an I frame or another P frame. For example P frame L4 is predictively encoded from I frame L1, and P frame L7 is predictively encoded from P frame L4. Note frames having an arrow emanating therefrom are frames currently being predictively coded and frames having an arrow terminating thereon are possible frames from which the prediction is made. Frames designated B, are bidirectionally predicted from the I and/or P frames between which they are disposed. It will be noted that no frames in the left sequence are predicted from B frames. The intraframe/interframe coding sequence shown for the left images in FIGURE 2 is one of the possible MPEG compression sequences.

In a first embodiment for compressing the right images, all of the right images are predicted from the concurrent left image or the immediately preceding left image or both. The predictive process is similar to the B frame encoding process except that prediction of frames for one signal is dependent from frames of a second signal, and all of the frames of the one signal are used as prediction bases for coding the second signal. This is different from normal B frame encoding as B frames are normally not employed as bases (anchors) for prediction. The arrows emanating from a right image and terminating on respective left images indicate the predictive dependency for the right frames. For example right frame R14 is predicted from left frame L4 or L3, and right frame R15 is predicted from left frame L5 or L4 and so forth. Conceptually more accurate predictions may be obtained if predictions are also available from not only the vertically adjacent and preceding left frames, but also the succeeding left frames as indicated by the dashed arrows. Incorporation of this further prediction however complicates the compression hardware as significant more memory is required to configure the system.

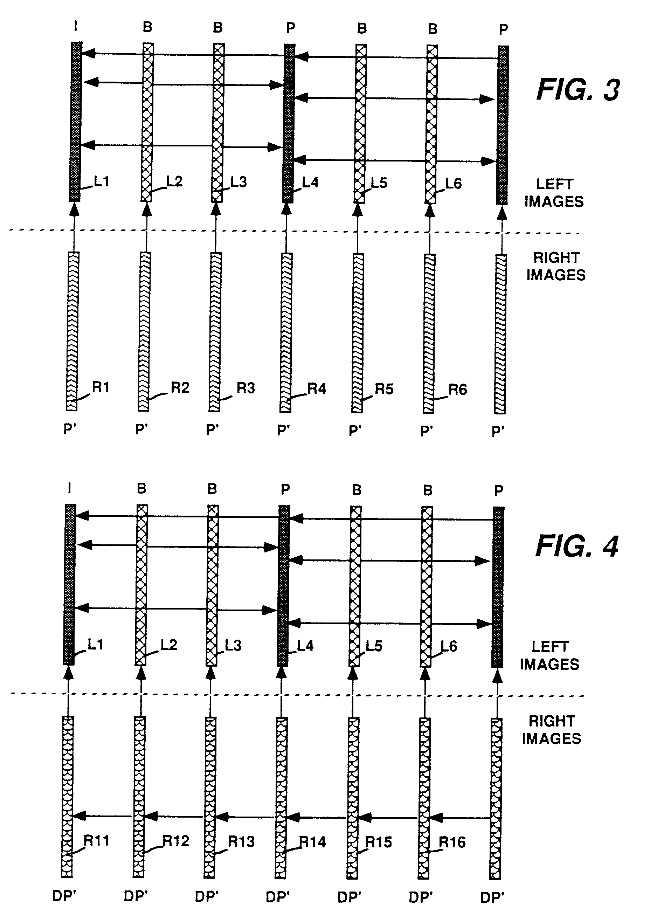

FIGURE 3 illustrates a second embodiment wherein the right images are predicted only from the vertically adjacent (contemporaneously occurring) left image. This predictive process is similar to P frame prediction except that anchor frames and the frames to be predicted occur in different image signals. Nominally one frame prediction dependency requires significantly less computation to generate the compressed predicted signal. However, the penalty paid is data (codewords) in the compressed signal. Having less prediction alternatives translates into fewer identical corresponding areas between the predicted frame and the anchor frame and consequently more non-zero residues and thus more data.

FIGURE 4 illustrates one further embodiment designated dual P predictive compression which generates DP' compressed frames. Right images are predicted from a combination of a P-like prediction from the vertically adjacent left frame and a P-like prediction from the immediately preceding right frame. Motion vectors are generated for each prediction and encoded. The respective predictions are averaged and the averaged prediction forms the compressed data.

With regard to the FIGURE 3 embodiment, and the portions of the FIGURES 2 and 4 embodiments which involve predicting the right frame or image from the vertically adjacent left frame or image, prediction calculations can be limited to horizontally disposed search windows. The vertically adjacent left images are captured simultaneously with the corresponding right images, hence there can be no relative image object motion between them. Any significant differences between the right and left images will only be in the horizontal dimension since both cameras are in the same horizontal plane. Therefore it is only necessary to search vertically adjacent images for horizontal displacement of the target area or block.

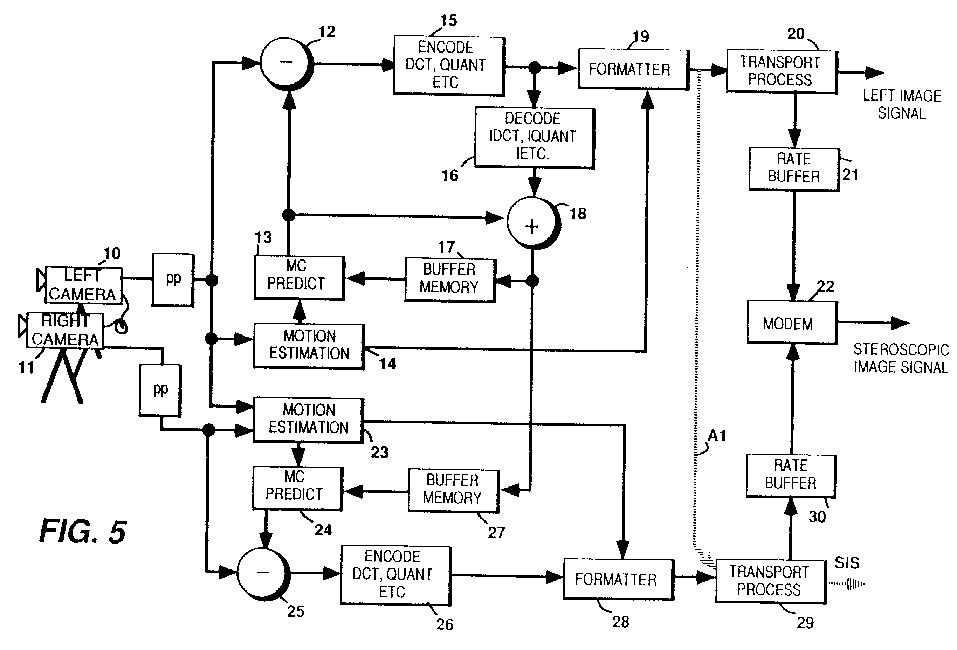

FIGURE 5 illustrates an exemplary compression apparatus suitable for performing compression of stereoscopic images as outlined above. The right and left image signals are provided by right 11 and left 10 cameras which are physically and electrically ganged together. That is, the cameras are fastened together with a small horizontal displacement, and they are electrically synchronized. Video signals generated by the cameras are applied to respective preprocessors PP which condition the respective signals for compression. For example the preprocessors may combine successive video fields into frames and reorder the frames to a sequence conducive to compression/decompression in a memory efficient manner. See for example U.S. Patent 5,122, 875. The left image signal is coupled to a well known motion compensated predictive compressor structure including elements 12 to 21 inclusive. The compressor including elements 12 to 21 performs intraframe and interframe compression according to, for example the sequence of I, P and B frame compression illustrated for the left image signal in FIGURE 2, and operates in a manner described in the U.S. Patent 5,122,875. A detailed description of this type of compressor will not be described herein. In general I frame pixel data are passed unaltered to the encoder 15 by the subtracter 12. The encoder 15 performs a discrete cosine transform, DCT, on the pixel data (in blocks of 8 X 8 pixels) to generate DCT coefficients. The coefficients are quantized to control the data rate and ordered in a predetermined sequence which tends to coalesce the majority of zero valued coefficients for efficient run-length coding. the encoder then run-length and statistically encodes the coefficients. The coded pixel representative data is applied to a formatter 19 which attaches information to indicate the source location of respective blocks within a frame, the coding type, (I, P, B), frame number, time stamps etc. according to the selected compression protocol, for example MPEG 2. The data from the formatter is applied to a transport processor 20 which segments the formatted data into payload packets of particular numbers of bits, generates identifiers to track the respective payloads, generates synchronization information and develops error correction/detection codes, and appends all of the latter to the respective payload packets to form transport packets. The transport packets are applied to an appropriate modem for transmission. Transport packets provided by the transport processor 20 conform to standard single channel or flatfield compressed video signal, and include all necessary data to reproduce the left image signal.

The I compressed frames from the encoder 15 are applied to a decoder 16 which performs the inverse function of the encoder 25. For I compressed frames the output of the decoder 16 is a reproduced I frame signal. The decompressed I fame is passed unaltered by the adder 18 to the buffer memory 17 wherein it is stored for predictive compression of subsequent P and B frames. Predictive encoding of P and B frames is similar, and P frame compression will be discussed. The left image frames are applied to a motion estimator 14, which divides the frame currently being compressed into blocks of e.g., 16 X 16 pixels. The estimator 14 then searches the preceding I or P frame for a similar 16 X 16 block of pixels, and calculates a set of vectors which indicate the relative difference in spatial coordinates of the block in the current frame and the most nearly identical block in the frame being searched. Using this vector, the corresponding block from the corresponding decompressed frame in buffer memory 17 is coupled to the subtracter 12 which subtracts the predicted block from memory 17, on a pixel by pixel basis, from the corresponding block of the current frame being decompressed. The differences or residues provided by the subtracter are applied to the encoder 15 wherein they are processed similar to the I frame pixel data. The vectors generated by the estimator 14 are coupled to the formatter 19 wherein they are included as a portion of the coded data associated with respective blocks.

The compressed P frames are decoded in the decoder 16 and applied to the adder 18. Concurrently the respective blocks of the image frame from which the frame was predicted are accessed from the buffer memory by the predictor 13 and applied to a second input of the adder 18 wherein the decoded residues or differences are added on a pixel by pixel basis to restore the actual image. The restored P frame data from the adder 18 is stored in the buffer memory 17 for predictively encoding/decoding subsequent P and B frames.

The buffer memory 17 which contains successive decompressed frames, would nominally only need be of sufficient size to store two frames of video i.e., a P frame and an I or another P frame. This is because in normal processing of the type exemplified for the left images in FIGURE 2, all frames are predicted from I and P frames. Hence it is not necessary to decompress or store B frames in the compression hardware. In the current system wherein right frames are to be predicted from all frames I, P or B, it is necessary to decompress and store the B frames as well as the I and P frames. The B frames need not be stored in buffer memory 17 of the left image compressor but may be stored in the buffer memory 27 of the right image compressor.

The actual memory arrangement will depend on the device technology selected for a particular system as well as all other factors relating to the speed requirements of the system. If the memories are sufficiently fast, the memories 17 and 27 may be subsumed into a single memory which is accessed by both right and left prediction circuits 24 and 13.

The right image signal processed by the respective preprocessor is coupled to a motion estimator 23 and a subtracter 25. The left image signal is also coupled to the motion estimator 23. The right and left frames are synchronized in the respective preprocessors such that the respective right and left frames are temporally related as illustrated in FIGURES 2-4. Predicted decompressed left image I, P and B frames, provided by the adder 18 are sequentially applied to and stored in the buffer memory 27. The motion estimator 23 divides the respective right frames into spatial blocks of pixel values and searches the appropriate left image frame or frames for the most nearly identical block of pixel values. The estimator calculates a vector relating the current right image frame pixel block to the most nearly identical left image frame pixel block, and applies the vector to the motion compensated predictor 24. Responsive to respective vectors the predictor accesses the corresponding decompressed left image frame pixel block from the buffer memory 27 and applies the data to the subtracter 25. The current right image frame pixel block being processed is concurrently applied to the subtracter 25 which generates residues on a pixel by pixel basis.

The residues are applied to an encoder 26 which performs similar encoding functions as the encoder 15. Processed data from the encoder 26 are applied to a formatter 28 along with corresponding vectors from the estimator 23. The formatter 28 is similar to the formatter 19 and performs similar functions. Formatted compressed right image data is packetized into transport packets by the transport processor 29 and coupled to a modem for transmission.

The compressed right image data provided by either the formatter 28 or the transport processor 29 can not be decompressed independently of the left image data.

FIGURE 5 shows the compressed right and left image data from the respective transport processors being coupled to respective rate buffers 21,30 and then to a modem 22. The modem 22 multiplexes the right and left compressed signals and applies the multiplexed data to the desired transmission medium. Multiplexing may be either of the time division multiplex variety or the frequency division multiplex variety. In either instance both signals will be conveyed on the same channel. Alternatively the right and left compressed image signals may, if desired, be transmitted on separate channels, such as two distinct cable or satellite channels.

An alternative arrangement may incorporate a single transport processor wherein both right and left image data signals are packetized in mutually exclusive transport packets. Respective transport packets will be coded with identifiers indicating their right or left image status. In this instance the right and left image transport packets will automatically be time division multiplexed.

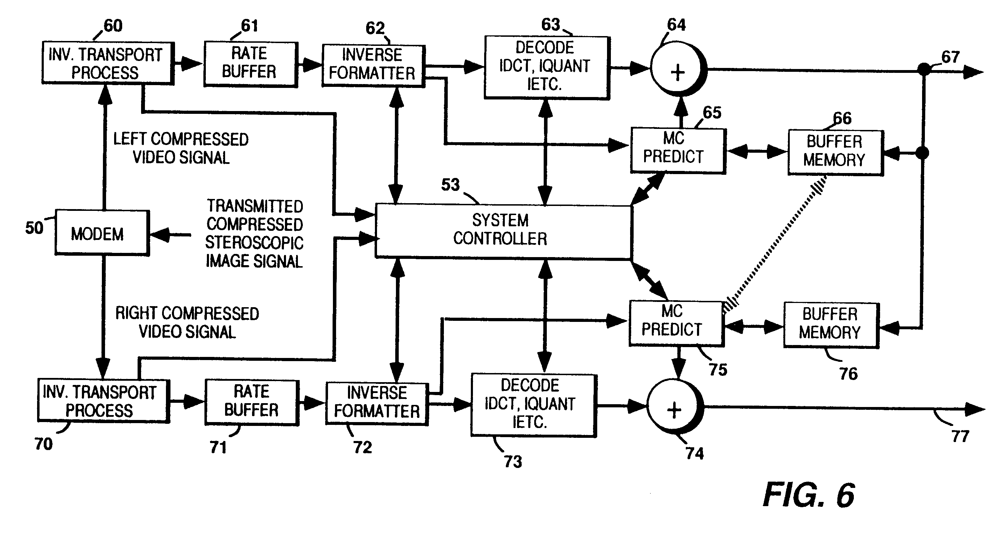

FIGURE 6 illustrates an example of a receiver for reproducing transmitted compressed stereoscopic image signals. The exemplary receiver apparatus is arranged to be, in general, the functional inverse of the FIGURE 5 encoding apparatus. Note that in FIGURE 6 a modem 50 provides signals to separate left and right image signal transport processors. In actuality the most likely form of data transmission will be time division multiplexed right and left image signal transport packets. A single transport processor will be implemented to a) separate the right and left image signal packets and b) to undo the respective packets.

In the figure, transmitted signal is detected by a modem 50 which separates and provides baseband right and left compressed image signals to inverse transport processors 70 and 60 respectively. The inverse transport processors remove the respective signal payloads from the respective transport packets and forward the payloads to respective rate buffers 71 and 61. The inverse transport processors, prior to forwarding payload data, do perform error checks and other house keeping tasks, such as those described in U.S. Patent 5,168,356. Signal identifiers from respective transport packets are provided to a system controller 53. Responsive to these signal identifiers the controller 53 maintains global system synchronization to ensure that corresponding right and left image signals course through the receiver system in temporal alignment. This may be performed by appropriate control of the inverse transport processors or the respective rate buffers for example. The respective right and left images signals are respectively applied to inverse formatters 72,62, which separate pixel representative data, vectors, and control data. The right and left vectors are applied to respective motion compensated predictors 75 and 65, the pixel data are applied to respective adders 74 ad 64, and the control data is applied to the system controller 53 to coordinate decompression.

The left image pixel data is applied to the decoder 63 which is similar to the decoder 16 of FIGURE 5, and provides either pixel DCT coefficients (I frames) or pixel residue DCT coefficients (P and B frames) to the adder 64. Either zero values (I frames) or prediction values (P and B frames) are coupled to a second input to the adder 64 by the motion compensated predictor 65. The adder 64 provides decompressed left image signals on the bus 67. As successive I and P frames are output from the adder 64 they are stored in a buffer memory 66, from which the predictor 65 generates predicted values responsive to corresponding vectors. Elements 60-66 generally conform to a single channel MPEG-like decompression apparatus.

Right image pixel representative data is applied to the decoder 73 from the inverse formatter 72. The decoder 73 is similar to the decoder 63 and provides pixel residue DCT coefficients to an adder 74. Corresponding predicted pixel values are applied to a second input terminal of the adder 74 by the predictor 75. Adder 74 provides decompressed right image video signals.

Vectors from the inverse formatter 72 are applied to the predictor 75. These vectors relate blocks of residues from the current right image frame being processed to the block of pixels of a left image frame from which the residues were in part generated. These blocks of pixels reside in the buffer memory 76 and correspond to decompressed left image frames. As respective I, P and B decompressed frames are developed at the output of adder 64, they are successively stored in the buffer memory 76 for generating the predicted right image values.

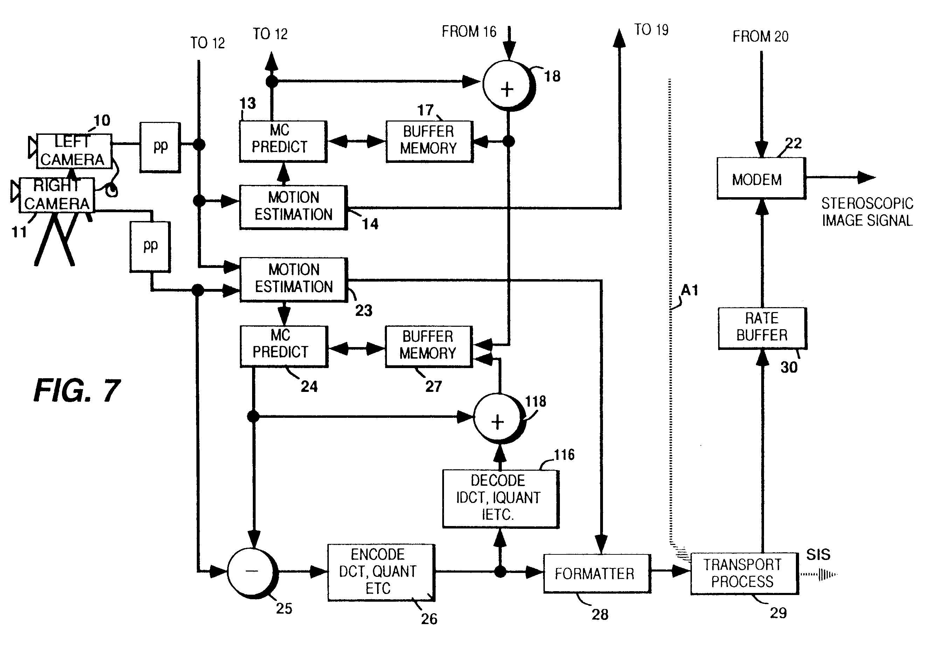

FIGURE 7 illustrates alterations to the FIGURE 5 circuitry to condition it to perform the compression process shown in FIGURE 4. Because the FIGURE 4 process involves predictive coding of right image frames depending from right image frames, the right processing channel must include a complete compressor. Thus a adder 118 and a decoder 116 need to be added to the right image compression circuitry. The decoder 116 is similar in construction and function to decoder 16.

## Claims

1. A method for compressing stereoscopic video signals characterized by:
providing a left video image signal and a right video image signal;
compressing one of said left and right video image signals independently of the other according to, at least in part predictive compression processes;
compressing the other of said left and right video image signals according to only predictive compression processes, wherein prediction of said other of said left and right video image signals is dependent on said one of said left and right video image signals; and
conditioning compressed said left and right image signals for transmission.

2. The method set forth in claim 1 characterized in that said other of said left and right video image signals is compressed according to predictive compression processes which depend solely from said one of said right and left video image signals.

3. The method set forth in claim 1 characterized in that said other of said left and right video image signals is compressed according to predictive compression processes which depend from both of said right and left video image signals.

4. The method set forth in claim 1 characterized in that respective frames of said other of said left and right video image signals are compressed according to predictive compression processes in dependence upon respective concurrently captured frames of the other of said left and right video image signals.

5. The method set forth in claim 1 characterized in that respective frames of said other of said left and right video image signals are compressed according to predictive compression processes in dependence upon respectively concurrently captured and immediately preceding frames of said other of said left and right video image signals.

6. Apparatus for receiving a compressed stereoscopic video image signal including compressed left and right image components, wherein respective frames of the left image component are either intraframe compressed or interframe compressed independent of said right image component, and respective frames of said right image component are interframe compressed dependent upon said left image component, said apparatus characterized by:
a detector (50) for detecting said compressed stereoscopic video image signal and providing compressed said left and right image components;
interframe/intraframe decompression means (60-66) responsive to said compressed left image component for reproducing a non-compressed left image signal; and
interframe decompression means (70-76) responsive to said compressed right image component and said non-compressed left image signal for reproducing a non-compressed right image signal.
